# EUROPÄISCHE PATENTSCHRIFT

(11) **EP 3 484 601 B1**
(45) Veröffentlichungstag und Bekanntmachung des Hinweises auf die Patenterteilung: **20.05.2020**
(21) Anmeldenummer: 17752006.1
(22) Anmeldetag: 13.07.2017
(51) Int. Cl.: B01D 53/86, B01D 53/94, B01F 3/12, C01C 1/08, C05G 3/00, C07C 273/02, F01N 3/20

(54) **VERWENDUNG EINER HARNSTOFFZUSAMMENSETZUNG ZUR HERSTELLUNG VON DIESEL EXHAUST FLUID**
USE OF A UREA COMPOSITION TO PRODUCE DIESEL EXHAUST FLUID
UTILISATION D'UNE COMPOSITION À BASE D'URÉE POUR LA PRODUCTION D'UN FLUIDE D'ÉCHAPPEMENT DIESEL

(30) Priorität: 15.07.2016 DE 102016213012
(43) Veröffentlichungstag der Anmeldung: 22.05.2019
(73) Patentinhaber: thyssenkrupp Fertilizer Technology GmbH, 44141 Dortmund (DE); thyssenkrupp AG, 45143 Essen (DE)
(72) Erfinder: KRAWCZYK, Thomas, 42117 Wupperthal (DE); POTTHOFF, Matthias, 44265 Dortmund (DE)
(74) Vertreter: thyssenkrupp Intellectual Property GmbH
(86) Internationale Anmeldenummer: PCT/EP2017/067657
(87) Internationale Veröffentlichungsnummer: WO 2018/011327

(56) Entgegenhaltungen:
- WO-A1-2006/004412
- WO-A1-2006/091077
- DE-A1- 10 342 551
- KR-B1- 101 544 503
- US-A1- 2003 072 698

## Beschreibung

Die Erfindung betrifft Verfahren zur Herstellung einer NOₓ-Reduktionsmittel AUS 32 Lösung (Diesel Exhaust Fluid) aus einer partikelförmigen, Harnstoff-haltigen Zusammensetzung, ihre Verwendung in Dieselfahrzeugen und eine NOₓ-Reduktionsmittel AUS 32 Lösung (Diesel Exhaust Fluid) erhältlich über das erfindungsgemäße Verfahren.

Für die Herstellung von partikelförmigen, Harnstoff-haltigen Zusammensetzungen sind verschiedene Verfahren im Stand der Technik bekannt. In der Vergangenheit wurden Harnstoffpartikel üblicherweise mittels Sprühkristallisation hergestellt, wobei eine im wesentlichen wasserfreie Harnstoffschmelze (Wassergehalt von 0,1 bis 0,3 Gew.-%) vom oberen Teil eines Sprühkristallisationsturmes in einen aufsteigenden Strom von Luft bei Umgebungstemperatur gesprüht werden und sich die Tropfen zu Kristallen (Prills) verfestigen. Die so erhaltenen Prills weisen relativ kleine Durchmesser sowie eine geringe mechanische Festigkeit auf.

Harnstoffpartikel mit größeren Teilchendurchmessern und besseren mechanischen Eigenschaften werden heute zumeist durch Granulierung einer im wesentlichen wasserfreien Harnstoffschmelze oder einer wässrigen Harnstofflösung in einem Fließbett hergestellt, wie beispielsweise in der US 4,219,589 beschrieben. In diesen Granulierungsverfahren wird eine wässrige Harnstofflösung mit einer Harnstoffkonzentration von 70-99,9 Gew.-% in Form von sehr fein verteilten Tröpfchen mit einem durchschnittlichen Durchmesser von 20-120 µm in ein Fließbett von Harnstoffpartikeln gegeben, wobei die Temperatur so gewählt ist, dass das Wasser der auf die Harnstoffpartikel aufgesprühten Lösung verdampft und Harnstoff auf den Partikeln abgeschieden wird, so dass ein Granulat mit einer gewünschten Partikelgröße von 2,5 mm und mehr erhalten wird.

Da in diesem Verfahren relativ große Mengen an feinem Staub anfallen, insbesondere wenn die eingesetzte Harnstofflösung einen Wassergehalt von mehr als 5 Gew.-% aufweist, werden häufig Granulierungsadditive eingesetzt, die diese Staubbildung reduzieren. Die Zugabe dieser Additive führt dazu, dass die Granulatpartikel und insbesondere deren Oberfläche plastisch bleiben, so dass infolge ihrer Rollbewegungen und Zusammenstöße runde Partikel mit einer glatten Oberfläche und einer guten mechanischen Stabilität erhalten werden. Das so erhaltene Granulat weist daher eine hohe Druck- und Stoßfestigkeit auf, eine geringe Tendenz zur Staubbildung durch Abrieb sowie darüber hinaus selbst bei längerer Lagerung nur eine geringe Neigung zur Verklumpung. Entsprechende Granulierungsadditive finden aber nicht nur in der Fließbettgranulierung ihre Anwendung, sondern auch in anderen Verfahren, wie beispielsweise der Sprühkristallisation oder der Trommelgranulierung.

Als Granulierungsadditive werden üblicherweise Formaldehyd bzw. wasserlösliche Additions- und/oder Kondensationsprodukte aus Formaldehyd und Harnstoff eingesetzt, die aber in relativ großen Mengen zugegeben werden müssen und aufgrund ihrer toxischen Eigenschaften in ihrer Handhabung nicht unproblematisch sind. Austritte von Formaldehyd stellen ein akutes Gesundheits- und Umweltrisiko dar, obwohl die Einführung von Harnstoff-Formaldehyd Präpolymeren wie UF80 oder UF85 derartige Risiken verringert hat. Zudem stellt entsprechend der Einordnung als "krebserregende Substanz" durch die IARC (International Agency for Research on Cancer als Teil der WHO) sich die Frage von Gesundheitsrisiken auch im Zusammenhang mit der chronischen Exposition gegenüber Formaldehyddämpfen, die auch durch die Verwendung derartiger Präpolymere nicht gänzlich vermieden werden.

Ein weiteres Problem bei der Granulierung von Harnstoff stellt die Entstehung von Staub dar, wobei hierunter Partikel mit einem Durchmesser von weniger als 0,5 mm verstanden werden. Diese Entstehung von Staub ist im Wesentlichen auf drei Quellen zurückzuführen. Zunächst ist der Abrieb des Granulats aufgrund von Bewegungen und Zusammenstößen der Partikel zu nennen, beispielsweise im Fließbett, wobei die Menge des anfallenden Staubs wesentlich von den mechanischen Eigenschaften des Granulats abhängt. Des Weiteren erzeugen die Düsen jeweils Tropfen mit einer gewissen Verteilung an Durchmessern, wobei sich die feinsten Tropfen dann verfestigen bevor sie auf die Harnstoffpartikel treffen, so dass der so gebildete Staub den Granulator mit der Abluft wieder verlässt. Schließlich ist als dritte Quelle der aus der Zerkleinerung zu großer Granulatpartikel gewonnene Staub zu nennen, der in den Verfahren und Anlagen nach dem Stand der Technik üblicherweise direkt wieder in den Granulator überführt wird. 10 bis 20 Gew.-% der zerkleinerten Partikel haben einen Durchmesser von weniger als 1 mm und ein großer Anteil davon ist Staub. So werden über diesen Anteil an zerkleinerten Partikel 1 bis 1,5 % Staub pro Tonne des Endproduktes wieder in den Granulator zurückgeführt und 3-5 % des Gesamtstaubes pro Tonne des Endproduktes einer Industrieanlage sind auf den Granulator zurückzuführen.

Zur Vermeidung bzw. Reduzierung der vorstehend genannten Nachteile wurden unterschiedliche Alternativen zu Formaldehyd und dessen wasserlöslichen Additions-und/oder Kondensationsprodukten untersucht, die aber jeweils auch mit Einschränkungen bzw. Nachteilen behaftet sind.

Beispielhaft sei auf die Verwendung von Alkalimetalllignosulfonaten verwiesen, wie in der US 5,766,302 beschrieben oder auf die Verwendung von Glyoxal oder Kohlenhydraten. Diese führen aber in dem erhaltenen Harnstoffprodukt in Abhängigkeit von dem Herstellungsverfahren zu einer gelblichen oder bräunlichen Färbung, die in vielen Fällen, beispielsweise bei der Herstellung von Melamin nicht erwünscht ist. Auf der anderen Seite führt die Verwendung von oberflächenaktiven Substanzen wie beispielsweise Mischungen aus Polyvinylacetat und Polyvinylalkohol als Granulierungsadditive ebenfalls zu Problemen, da diese zum Schäumen neigen, beispielsweise wenn das Additiv mit der Schmelze gemischt wird oder in den Wäschern, wo der behandelte Harnstoffstaub aufgelöst wird und den Wirkungsgrad der Wäscher beeinträchtigt. Die Neigung dieser Substanzen zur Schaumbildung hat zudem auch Auswirkungen auf das Endprodukt, das eine geringere Dichte aufweist und vom Markt nicht akzeptiert wird. Insgesamt ist daher eine Neigung zur Schaumbildung bei industrieller Anwendung der Harnstoffgranulate nicht akzeptabel.

Im Zuge immer strengerer Umweltauflagen zum Ausstoß von Stickoxiden (NO_{X}) von Dieselfahrzeugen, bekommt dem Einsatz von technisch-reinen Harnstofflösungen eine immer größere Bedeutung. Die Harnstofflösung wird dabei in das Abgas geleitet und führt in einer Selektiven Katalytischen Reduktion (SCR) zur Umsetzung der im Abgas vorhandenen Stickoxide in Stickstoff (N₂) und Wasser (H₂O). Der in das Abgas eingespritzte Harnstoff wird thermisch in Ammoniak (NH₃) zersetzt. Das so freiwerdende Ammoniak reduziert die im Abgas vorhandenen Stickoxide. Die Zusammensetzung dieser technisch-reinen Harnstofflösung, auch bekannt als Diesel-Exhaust-Fluid, AUS 32 (aqueous urea solution) oder AdBlue®, ist gemäß ISO 22241 sehr genau festgelegt. Die technisch-reinen Harnstofflösung enthält 32,5 Gew. % Harnstoff. Eine Auflistung der Qualitätsmerkmale und Verunreinigungen findet sich auch in der DIN 7007:2005-08. Diese Norm setzt insbesondere für Aldehyde einen Grenzwert von 5 mg/kg fest.

Aufgrund der strengen Vorgaben zur Reinheit des Harnstoffes können nicht beliebige Harnstoffquellen verwendet werden. In der Regel werden daher der direkt in der Herstellung anfallende Harnstoff mit vollentsalzten Wasser (VE-Wasser oder Destillierten Wasser) in der vorgegebenen Konzentration versetzt und zum Bestimmungsort transportiert. Auf diese Art und Weise werden neben dem Harnstoff auch bis zu 2/3 Wasser transportiert. Zudem können diese wässrigen Lösungen nicht beliebig lange transportiert und gelagert werden, vielmehr ist eine biologische Zersetzung möglich. Die Alternative, d.h. der Transport von Harnstoffgranulat zum Bestimmungsort, scheitert oftmals an den im Granulat vorhandenen Aldehyden, welche einen Einsatz als NO_{X}-Reduktionsmittel AUS 32 Lösung verhindern.

US2003/0072698 offenbart u.a. die Verwendung einer wässrigen Lösung von Harnstoff, nach dem Mischen von Wasser und festem Harnstoff, als NO_{X}-Reduktionsmittel für Abgase aus Verbrennungsprozessen.

WO2006/091077 offenbart Harnstoffzusammensetzungen mit Additiven für verbesserte physikalische Eigenschaften.

Es ist daher eine Aufgabe der vorliegenden Erfindung, ein Verfahren zur Herstellung einer NO_{X}-Reduktionsmittel AUS 32 Lösung (Diesel Exhaust Fluid) aus einer partikelförmigen Harnstoff-haltigen Zusammensetzungen und Wasser zur Verfügung zu stellen, welche die Nachteile des Standes der Technik nicht oder zumindest in verringerter Form aufweist.

Diese Aufgabe wird durch den Gegenstand der Beschreibung und der Patentansprüche gelöst.

Es wurde überraschend gefunden, dass mit dem erfindungsgemäßen Verfahren durch Mischen von Wasser mit einer harnstoffhaltigen, partikuläre Zusammensetzung mit zufriedenstellenden Eigenschaften ohne den Einsatz von Formaldehyd und Harnstoff-Formaldehyd Kondensaten erhalten werden kann und zusammen mit vollentsalzten Wasser zur Herstellung einer NOₓ-Reduktionsmittel AUS 32 Lösung (Diesel Exhaust Fluid), bevorzugt nach ISO 22241, verwendet werden kann. Insbesondere können so
- harnstoffhaltige Partikel bereitgestellt werden, welche die Reinheitsvorgaben für die Herstellung einer AUS 32 Lösung (Diesel Exhaust Fluid) erfüllen. Des Weiteren kann die Herstellung der AUS 32 Lösung (Diesel Exhaust Fluid) dezentral von der Harnstoffsynthese erfolgen und somit die zu transportierende Menge um bis zu 2/3 reduziert werden. Dies senkt neben dem notwendigen Treibstoffverbrauch auch die beim Transport freiwerdenden Emissionen. Zudem wird der Verpackungsaufwand für die NOₓ-Reduktionsmittel AUS 32 Lösung deutlich reduziert. Der Aufwand zum Transport und Verpackung einer bis zu 2/3 schwereren NOₓ-Reduktionsmittel AUS 32 Lösung am Ort der Harnstoffsynthese zum Nutzungsort ist deutlich höher als die Verpackung und Transport einer kleineren Menge Harnstoffgranulat.
- die mit dem Einsatz von Formaldehyd und Harnstoff-Formaldehyd Kondensaten verbundenen Gesundheits- und Umweltrisiken vermieden werden; und/oder
- eine kostengünstigere Alternative zur Herstellung der Zusammensetzungen gegenüber von unter Verwendung von Formaldehyd und Harnstoff-Formaldehyd Kondensaten hergestellten Zusammensetzungen bereitgestellt werden. Die erfindungsgemäße Harnstoffzusammensetzung erlaubt den Einsatz eines für den Düngemittelbereich optimierten Harnstoffgranulats. Die erfinderische Harnstoffzusammensetzung erfüllt in wässriger Lösung überaschenderweise die in der Norm DIN 70070:2005-08 in Tabelle 1 genannten Grenzwerte für AUS 32 Lösung (Diesel Exhaust Fluid). Im Gegensatz hierzu können herkömmliche Harnstoffzusammensetzungen für den Düngemittelbereich, insbesondere durch den hohen Formaldydgehalt diese Norm in der Regel nicht einhalten.; und/oder
- die Bildung von Staub während der Herstellung der Zusammensetzung reduziert oder sogar vollständig vermieden werden, und/oder
- eine partikelförmige Zusammensetzung erhalten werden, deren Teilchen im Vergleich zu unter der Verwendung von Formaldehyd und Harnstoff-Formaldehyd Kondensaten hergestellten Zusammensetzungen zumindest vergleichbare oder sogar bessere Eigenschaften zeigen, insbesondere in Hinblick auf mechanische Eigenschaften wie beispielsweise Druckfestigkeit, Stoßfestigkeit, geringe Neigung zum Abrieb oder zum Verklumpen, insbesondere bei längerer Lagerung.

Die Erfindung betrifft ein Verfahren zur Herstellung einer NOₓ-Reduktionsmittel AUS 32 Lösung (Diesel Exhaust Fluid) mindestens umfassend das Mischen von Wasser und einer partikelförmigen Zusammensetzung enthaltend:
(i) Harnstoff;
und ein Additiv umfassend eine Komponente (ii):
(ii) Kombination aus wenigstens einem Amino-Gruppen enthaltenden Polymer oder Oligomer und wenigstens einer funktionalisierten Polyvinylverbindung;
wobei der Gewichtsanteil der Komponente (i) in der partikelförmigen Zusammensetzung > 60 Gew.-% und der Gewichtsanteil der Komponente (ii) in der partikelförmigen Zusammensetzung < 1 Gew.-% beträgt und
wobei eine Harnstofflösung erhalten wird und der Gewichtsanteil der Komponente (i) in der Harnstofflösung zwischen größer/gleich 31 Gew. % und kleiner/gleich 34 Gew. %, insbesondere 31,8 Gew. % und 33,2 Gew. % beträgt. Die erhaltene Harnstofflösung entspricht im Rahmen der in der ISO 22241 vorgegebenen Konzentrationen der NOₓ-Reduktionsmittel AUS 32 Lösung (Diesel Exhaust Fluid).

Die erfindungsgemäße partikelförmige Zusammensetzung enthält bevorzugt keine oder nur geringfügige Mengen an Aldehyden und/oder Schwefel kleiner 20 ppm. Dies bedeutet im Sinne der Erfindung, dass die genannten Komponenten in der erhältlichen NOₓ-Reduktionsmittel AUS 32 Lösung in niedriger Konzentration enthalten sind als unter ISO 22241 und/oder DIN 70070:2005-08 angegeben.

Erfindungsgemäß zum Einsatz kommende Amino-Gruppen enthaltende Polymere und Oligomere umfassen insbesondere Polymere und Oligomere mit einem Molekulargewicht (MW) von 250 bis 2,000,000, von 300 bis 2,000,000, von 350 bis 2,000,000, von 400 bis 2,000,000, von 450 bis 2,000,000, von 500 bis 2,000,000, von 550 bis 2,000,000, von 600 bis 2,000,000, von 650 bis 2,000,000, von 700 bis 2,000,000, von 750 bis 2,000,000, von 800 bis 2,000,000, von 850 bis 2,000,000, von 900 bis 2,000,000, von 950 bis 2,000,000, von 1000 bis 2,000,000, von 1050 bis 2,000,000, von 1100 bis 2,000,000, von 1150 bis 2,000,000, sowie von 1200 bis 2,000,000 Dalton.

Beispielsweise können die erfindungsgemäß zum Einsatz kommenden Amino-Gruppen enthaltenden Polymere und Oligomere ein Molekulargewicht (MW) von 500 bis 1,000,000, von 550 bis 1,000,000, von 600 bis 1,000,000, von 650 bis 1,000,000, von 700 bis 1,000,000, von 750 bis 1,000,000, von 800 bis 1,000,000, von 850 bis 1,000,000, von 900 bis 1,000,000, von 950 bis 1,000,000, von 1000 bis 1,000,000, von 1050 bis 1,000,000, von 1100 bis 1,000,000, von 1150 bis 1,000,000, sowie von 1200 bis 1,000,000 Dalton oder im Bereich von 500 bis 10,000, von 550 bis 10,000, von 600 bis 10,000, von 650 bis 10,000, von 700 bis 10,000, von 750 bis 10,000, von 800 bis 10,000, von 850 bis 10,000, von 900 bis 10,000, von 950 bis 10,000, von 1000 bis 10,000, von 1050 bis 10,000, von 1100 bis 10,000, von 1150 bis 10,000, sowie von 1200 bis 10,000 Dalton aufweisen.

Vorzugsweise können die Amino-Gruppen enthaltenden Polymere und Oligomere einen Stickstoffgehalt von 10 bis 50 Gew.-%, bezogen auf das Gewicht des Polymers oder Oligomers, aufweisen und primäre, sekundäre oder tertiäre Aminogruppen enthalten, die unabhängig voneinander Alkyl oder Arylalkyl-Gruppen enthalten, beispielsweise C₁₋₆-Alkyl oder Aryl-C₁₋₃-Alkyl, wobei Aryl insbesondere für Phenyl oder Pyridyl stehen kann, welches unsubstituiert oder ggf. mit 1, 2, 3, 4 oder 5 Substituenten unabhängig voneinander ausgewählt aus der Gruppe bestehend aus F, Cl, Br, CF₃, C₁₋₆-Alkyl, C₁₋₆-Alkoxy, NH₂, C₁₋₆-Alkyl amino und Di(C₁₋₆-Alkyl)amino substituiert sein kann.

Beipielsweise kommen als Amino-Gruppen enthaltende Polymere und Oligomere Polyamine, polymere Polyamine, Stickstoff-substituierte Vinylpolymere, Polyoxazoline, Polypropylenimin und dessen Dendrimere, Polyethylenimin und dessen Dendrimere, Polyamidoamin und dessen Dendrimere, sowie Copolymere und Derivate und Kombinationen aus zwei oder mehr der genannten Substanzen in Betracht.

Bevorzugte Amino-Gruppen enthaltende Polymere und Oligomere umfassen Polyamine und polymere Polyamine, Polyalkylenimine wie z.B. Polyethylenimine und Polypropylenimine, Polyvinylamine, polyalkoxylierte Polyamine, ethoxylierte Polyamine, propoxylierte Polyamine, alkylierte und benzylierte Polyamine sowie Kombinationen aus zwei oder mehr der vorstehend genannten Komponenten.

Ganz besonders bevorzugt kommen als Amino-Gruppen enthaltende Polymere und Oligomere Polyethylenimine, Polyethylenimin Dendrimere, sowie deren Copolymere, Derivate und Mischungen aus wenigstens zwei dieser Komponenten zum Einsatz.

Geeignete Polyethylenimine können lineare oder verzweigte Polyethylenimin Polymere oder Oligomere umfassen mit beispielsweise 10 oder mehr Monomer-Einheiten sowie deren Derivate, Analoga, Copolymere und Mischungen aus wenigstens zwei dieser Komponenten.

Polyethylenimine können durch die Polymerisation von Ethylenimin erhalten werden und sind käuflich am Markt erhältlich, beispielsweise in Form der Lupasol® und Epomin® Produktfamilien und hier insbesondere der Produkte Lupasol® G20, Lupasol® FG, Lupasol® G35, Lupasol® P, und Lupasol®1595 (die Lupasol® Produkte sind erhältlich von der BASF (Florham Park, NJ, USA)), sowie Epomin® SP-003, Epomin® SP-006, Epomin® SP-012, Epomin® SP-018, Epomin® SP-200, Epomin® SP-1000, und Epomin® SP-1050 (die Epomin® Produkte sind erhältlich von Nippon Shokubai (Osaka, Japan)).

Als funktionalisierte Polyvinylverbindungen kommen erfindungsgemäß insbesondere Verbindungen basierend auf der Wiederholeinheit (CHXCHY)ₙ in Betracht, worin X ausgewählt ist aus der Gruppe bestehend aus H, NH₂, OH, COOH, COR, CONH₂, CH₂NH₂, CH₂NHR, CH₂OH und CH₂OR und Y ausgewählt ist aus der Gruppe bestehend aus NH₂, OH, COOH, COR, CONH₂, CH₂NH₂, CH₂NHR, CH₂OH und CH₂OR und wobei R jeweils unabhängig voneinander für Alkyl, insbesondere C₁₋₆-Alkyl, oder Aryl, insbesondere für Phenyl oder Pyridyl stehen kann, welches unsubstituiert oder ggf. mit 1, 2, 3, 4 oder 5 Substituenten unabhängig voneinander ausgewählt aus der Gruppe bestehend aus F, Cl, Br, CF₃, C₁₋₆-Alkyl, C₁₋₆-Alkoxy, NH₂, C₁₋₆-Alkyl amino und Di(C₁₋₆-Alkyl)amino substituiert sein kann.

Beispielsweise können die erfindungsgemäß zum Einsatz kommenden funktionalisierten Polyvinylverbindungen ein Molekulargewicht (MW) von 250 bis 2,000,000, von 300 bis 2,000,000, von 350 bis 2,000,000, von 400 bis 2,000,000, von 450 bis 2,000,000, von 500 bis 2,000,000, von 550 bis 2,000,000, von 600 bis 2,000,000, von 650 bis 2,000,000, von 700 bis 2,000,000, von 750 bis 2,000,000, von 800 bis 2,000,000, von 850 bis 2,000,000, von 900 bis 2,000,000, von 950 bis 2,000,000, von 1000 bis 2,000,000, von 1050 bis 2,000,000, von 1100 bis 2,000,000, von 1150 bis 2,000,000, sowie von 1200 bis 2,000,000 Dalton.

Als funktionalisierte Polyvinylverbindung kommt bevorzugt Polyvinylalkohol oder Polyvinylamin oder deren Mischung in Betracht. Besonders bevorzugt ist die funktionalisierte Polyvinylverbindung ein Polyvinylamin.

Das Polyvinylamin und der Polyvinylalkohol können jeweils bevorzugt ein Molekulargewicht (MG) von 500 bis 1,000,000, von 550 bis 1,000,000, von 600 bis 1,000,000, von 650 bis 1,000,000, von 700 bis 1,000,000, von 750 bis 1,000,000, von 800 bis 1,000,000, von 850 bis 1,000,000, von 900 bis 1,000,000, von 950 bis 1,000,000, von 1000 bis 1,000,000, von 1050 bis 1,000,000, von 1100 bis 1,000,000, von 1150 bis 1,000,000, sowie von 1200 bis 1,000,000 Dalton oder im Bereich von 500 bis 10,000, von 550 bis 10,000, von 600 bis 10,000, von 650 bis 10,000, von 700 bis 10,000, von 750 bis 10,000, von 800 bis 10,000, von 850 bis 10,000, von 900 bis 10,000, von 950 bis 10,000, von 1000 bis 10,000, von 1050 bis 10,000, von 1100 bis 10,000, von 1150 bis 10,000, sowie von 1200 bis 10,000 Dalton aufweisen.

Geeignete Polyvinylamine umfassen insbesondere lineare Polymere und Copolymere, die sich von Vinylformamid-Monomeren ableiten und kationische und anionische Polyvinylamin-Copolymere sowie geladene und protonierte Polyvinylamine umfassen können.

Geeignete Polyvinylamine sind käuflich am Markt erhältlich, beispielsweise solche der Lupamin® Produktfamilie und hier insbesondere die Produkte Lupamin® 1595, Lupamin® 4500, Lupamin® 5095, Lupamin® 9030, Lupamin® 9050 und Lupamin® 9095. Beispiele kationischer und anionischer Polyvinylamin-Copolymere sind solche der Luredur® Produktfamilie und hier insbesondere die Produkte Luredur® Am na, Luredur® AV, Luredur® VH, Luredur® VI, Luredur® VM, Luredur® PR8094, Luredur® PR8261, und Luredur® PR8349. Beispiele geladener oder protonierter Polyvinylamine sind Produkte der Catiofast® Produktreihe und hier insbesondere die Produkte Catiofast® GM, Catiofast® PL, Catiofast® PR8236, Catiofast® VCB, Catiofast® VFH, Catiofast® VLW, Catiofast® VMP und Catiofast® VSH. Die Lupamin®, Luredur®, und Catiofast® Produkte sind erhältlich von der BASF (Florham Park, NJ, USA).

Sofern nicht anders angegeben, beziehen sich die im Zusammenhang mit der partikelförmigen Zusammensetzung angegebenen Gewichtsangaben (Gew.-%) jeweils immer auf das Gesamtgewicht der partikelförmigen Zusammensetzung. Der Fachmann erkennt, dass die angegebenen Komponenten und Gewichtsangaben nicht für jede beliebig kleine Teilmenge der Partikel erfüllt sein müssen, sondern im Mittel über eine repräsentative Menge der hergestellten Partikel.

Sofern nicht anders angegeben, beziehen sich die im Zusammenhang mit der NOₓ-Reduktionsmittel AUS 32 Lösung oder Harnstofflösung angegebenen Gewichtsangaben (Gew.-%) jeweils immer auf das Gesamtgewicht der NOₓ-Reduktionsmittel AUS 32 Lösung oder Harnstofflösung.

Die erfindungsgemäße partikelförmige Zusammensetzung kann gegebenenfalls neben den genannten Bestandteilen weitere Bestandteile enthalten. Die Art der Bestandteile sowie deren Menge hängen beispielsweise von der eingesetzten Komponente (i) ab. So kann die erfindungsgemäße partikelförmige Zusammensetzung Wasser enthalten, z.B. in einer Menge von 0,05 bis 0,5 Gew.-%, insbesondere 0,1 bis 0,3 Gew.-% und Nebenprodukte der Harnstoffsynthese wie z.B. Biuret oder NH₃. Üblicherweise beträgt der Anteil der Nebenprodukte nicht mehr als 1,5 Gew.-%, insbesondere nicht mehr als 1,25 Gew.-%.

In einer bevorzugten Ausführungsform des Verfahrens enthält die partikelförmige Zusammensetzung als Komponente (iii) des Additivs wenigstens eine Verbindung ausgewählt aus der Gruppe der aliphatischen Dicarbonsäuren, ihren Salzen und Anhydriden, der aliphatischen Tricarbonsäuren, ihren Anhydriden, der aromatischen Dicarbonsäuren, ihren Salzen und Anhydriden, sowie den Anhydriden wobei vorzugsweise der Gewichtsanteil der Komponente (i) > 60 Gew.-% und der Gewichtsanteil der Summe der Komponenten (ii) und (iii) in der Zusammensetzung < 1 Gew.-% beträgt.

Der Fachmann erkennt, dass die eingesetzten Komponenten (ii) und (iii) bei der Herstellung der partikelförmigen Zusammensetzung ggf. untereinander und ggf. auch mit der Harnstoff-Komponente (i) teilweise oder sogar vollständig in Wechselwirkung treten können. So ist beispielsweise die Vernetzung unter Ausbildung von kovalenten Bindungen für Aldehyde bzw. Carbonsäureanhydride mit Harnstoff bekannt oder die Bildung von Komplexen aus Harnstoff und Carbonsäuren. Komponenten, wie z.B. Polyvinylalkohol und Polyvinylamin neigen zur Ausbildung von Wasserstoffbrückenbindungen. Ggf. liegen die zur Herstellung der partikelförmigen Zusammensetzung eingesetzten Komponenten in dem erhaltenen Endprodukt daher in teilweise oder vollständig modifizierter Form vor. Erfindungsgemäß sind auch derartige modifizierte Komponenten mitumfasst.

In einer besonders bevorzugten Ausführungsform des Verfahrens enthält die erfindungsgemäße partikelförmige Zusammensetzung
(i) Harnstoff;
und ein Additiv umfassend die Komponente (ii) und eine Komponente (iii):
(ii) Kombination aus Polyethylenimin und Polyvinylalkohol oder Kombination aus Polyethylenimin und Polyvinylamin;
(iii) wenigstens eine Verbindung ausgewählt aus der Gruppe der aliphatischen Dicarbonsäuren, ihren Salzen und Anhydriden, der aliphatischen Tricarbonsäuren, ihren Salzen und Anhydriden, der aromatischen Dicarbonsäuren und Anhydriden,
wobei vorzugsweise der Gewichtsanteil der Komponente (i) in der partikelförmigen Zusammensetzung > 97 Gew.-% und der Gewichtsanteil der Summe der Komponenten (ii) und (iii) in der partikelförmigen Zusammensetzung < 1 Gew.-% beträgt.

Sofern die erfindungsgemäße Zusammensetzung eine aliphatische Dicarbonsäure als Komponente (iii) aufweist, kann diese bevorzugt ausgewählt werden aus der Gruppe bestehend aus Oxalsäure, Malonsäure, Bernsteinsäure, Glutarsäure, Adipinsäure, Pimelinsäure, Suberinsäure, Azealinsäure, Sebacinsäure, Undecandisäure, Dodecandisäure, Tridecandisäure, Tetradecandisäure, Hexadecandisäure, sowie jeweils deren Anhydride. Besonders bevorzugt liegt als Dicarbonsäure der Komponente (iii) Oxalsäure, Bernsteinsäure oder eine Mischung dieser beiden Säuren vor.

Sofern die erfindungsgemäße Zusammensetzung eine aliphatische Tricarbonsäure als Komponente (iii) aufweist, kann diese bevorzugt ausgewählt werden aus der Gruppe bestehend aus Zitronensäure, Iso-Zitronensäure, sowie jeweils deren Anhydriden. Besonders bevorzugt liegt als Tricarbonsäure der Komponente (iii) Zitronensäure vor.

Weist die erfindungsgemäße Zusammensetzung als Komponente (iii) eine aromatische Dicarbonsäure oder deren Anhydrid auf, so kann diese bevorzugt ausgewählt werden aus der Gruppe bestehend Phthalsäure, Phthalsäureanhydrid, Isophthalsäure und Terephthalsäure. Besonders bevorzugt liegt als aromatische Dicarbonsäure der Komponente (iii) bzw. deren Anhydrid Phthalsäure, Phthalsäureanhydrid oder deren Mischung vor.

In einer weiteren bevorzugten Ausführungsform des Verfahrens enthält die partikelförmige Zusammensetzung
(i) Harnstoff;
und ein Additiv umfassend die Komponente (ii) und die Komponente (iii):
(ii) Kombination aus Polyethylenimin und Polyvinylamin;
(iii) wenigstens eine Verbindung ausgewählt aus der Gruppe bestehend aus Oxalsäure,
Bernsteinsäure, Zitronensäure, Phthalsäure und Phthalsäureanhydrid,
wobei der Gewichtsanteil der Komponente (i) in der partikelförmigen Zusammensetzung > 97 Gew.-% und der Gewichtsanteil der Summe der Komponenten (ii) und (iii) in der partikelförmigen Zusammensetzung < 1 Gew.-% beträgt.

Ganz besonders bevorzugte Ausführungsformen der partikelförmigen Zusammensetzung im Verfahren enthalten
(i) Harnstoff;
   und ein Additiv ausgewählt aus der Gruppe (a)-(g)
   (a) Additiv umfassend (ii) eine Kombination aus Polyethylenimin und Polyvinylamin;
   (c) Additiv umfassend (ii) eine Kombination aus Polyethylenimin und Polyvinylamin und (iii) Oxalsäure;
   (d) Additiv umfassend (ii) eine Kombination aus Polyethylenimin und Polyvinylamin und (iii) Zitronensäure;
   (e) Additiv umfassend (ii) eine Kombination aus Polyethylenimin und Polyvinylamin und (iii) Bernsteinsäure;
   (f) Additiv umfassend (ii) eine Kombination aus Polyethylenimin und Polyvinylamin und (iii) Phthalsäure;
   (g) Additiv umfassend (ii) eine Kombination aus Polyethylenimin und Polyvinylamin und (iii) Phthalsäureanhydrid;
wobei der Gewichtsanteil der Komponente (i) in der partikelförmigen Zusammensetzung > 97 Gew.-% und der Gewichtsanteil der Summe der Komponenten (ii) und (iii) in der partikelförmigen Zusammensetzung < 1 Gew.-% beträgt.

Der Gewichtsanteil der Komponte (i) in der partikelförmigen Zusammensetzung beträgt vorzugsweise > 97 Gew.-%, besonders bevorzugt > 98 Gew.-%, ganz besonders bevorzugt > 98,5 Gew.-%.

Der Gewichtsanteil der Additiv-Komponente kann variieren, beispielsweise in Abhängigkeit von den eingesetzten Komponenten (ii)und (iii). Vorzugsweise beträgt der Gewichtsanteil der Summe der Komponenten (ii) und (iii) in der partikelförmigen Zusammensetzung < 0,5 Gew.-%, besonders bevorzugt < 0,4 Gew.-%, ganz besonders bevorzugt < 0,3 Gew.-% und noch weiter bevorzugt < 0,25 Gew.-%.

Sofern die Additiv-Komponente zwei oder mehr Komponenten umfasst, können auch deren relative Anteile variieren. So kann beispielsweise das Gewichtsverhältnis der Komponenten der Komponenten (ii) und (iii) im Bereich von 1:20 bis 20:1, vorzugsweise von 1:15 bis 15:1, besonders bevorzugt 1:10 bis 10:1 liegen und inkrementelle Werte dazwischen umfassen.

Ganz besonders bevorzugte Ausführungsformen der partikelförmigen Zusammensetzung des Verfahrens enthalten eine Kombination aus Polyethylenimin und Polyvinylamin. Das Gewichtsverhältnis von Polyethlyenimin und Polyvinylamin innerhalb der Kombination dieser beiden Komponenten kann variieren, beispielsweise im Bereich von 1:20 bis 20:1, vorzugsweise von 1:15 bis 15:1, besonders bevorzugt 1:10 bis 10:1 und inkrementelle Werte dazwischen umfassen.

Des Weiteren kann auch das Gewichtsverhältnis der Kombination aus den beiden Komponenten Polyethlyenimin und Polyvinylamin zu Komponente (iii) variieren und jeweils beispielsweise im Bereich von 1:20 bis 20:1, vorzugsweise von 1:15 bis 15:1, besonders bevorzugt 1:10 bis 10:1 und inkrementelle Werte dazwischen umfassen.

In einer bevorzugten Ausführungsform des Verfahrens ist die erfindungsgemäße partikelförmige Zusammensetzung im Wesentlichen frei von Formaldehyd. Der Ausdruck "im Wesentlichen frei von Formaldehyd" bedeutet im Sinne der vorliegenden Erfindung, dass die Zusammensetzung < 0,1 Gew.-%, vorzugsweise < 0,05 Gew.-%, besonders bevorzugt < 0,005 Gew.-% und noch weiter bevorzugt < 0,0005 Gew.-% Formaldehyd aufweist.

Die Erfindung umfasst des Weiteren eine NOₓ-Reduktionsmittel AUS 32 Lösung (Diesel Exhaust Fluid) erhältlich gemäß dem erfindungsgemäßen Verfahren. Die NOₓ-Reduktionsmittel AUS 32 Lösung unterscheidet sich dabei in ihrer durch die Partikeladditive vorgebenen Verunreinigungen von reinem Harnstoff in Wasser Lösungen. Insbesondere polymere Zusätze lassen sich außer über das Verfahren anderweitig schwierig charakterisieren.

Alle bevorzugten Ausführungsformen, welche vorstehend im Zusammenhang mit der erfindungsgemäßen partikelförmigen Zusammensetzung beschrieben wurden, gelten entsprechend auch für die erfindungsgemäße Verwendung des Additivs zur Herstellung einer partikelförmigen Zusammensetzung enthaltend Harnstoff und werden daher an dieser Stelle nicht wiederholt.

Im Folgenden wird aus Gründen der Vollständigkeit noch ein mögliches Verfahren gemäß WO 2015/193377 A1 zur Herstellung einer partikelförmigen Zusammensetzung offenbart, enthaltend Harnstoff umfassend die Schritte:
(A) Bereitstellen einer Harnstoff-haltigen Lösung;
(B) Granulieren der Harnstoff-haltigen Lösung unter Zugabe eines Additivs mit einer Zusammensetzung wie vorstehend beschrieben.

Alle bevorzugten Ausführungsformen, welche vorstehend im Zusammenhang mit der erfindungsgemäßen partikelförmigen Zusammensetzung beschrieben wurden, gelten entsprechend auch für das offenbarte Verfahren zur Herstellung einer partikelförmigen Zusammensetzung enthaltend Harnstoff und werden daher an dieser Stelle nicht wiederholt.

In einer bevorzugten Ausführungsform des Verfahrens zur Herstellung einer partikelförmigen Zusammensetzung beträgt der Harnstoff-Gehalt der in Schritt (A) eingesetzten Lösung > 60 Gew.-%, vorzugsweise > 95 Gew.-%, besonders bevorzugt > 97 Gew.-%, ganz besonders bevorzugt > 98 Gew.-%, noch weiter bevorzugt > 98,5 Gew.-% beträgt.

Das Granulieren der Harnstoff-haltigen Lösung unter Zugabe eines Additivs gemäß Schritt (B) kann nach üblichen, dem Fachmann bekannten Methoden erfolgen, beispielsweise mittels Sprühkristallisation (Prilling), Trommelgranulierung oder Fließbettgranulierung.

In einer offenbarten Ausführungsform des Verfahrens zur Herstellung einer partikelförmigen Zusammensetzung erfolgt die Granulierung in Schritt (B) mittels Fließbettgranulierung umfassend die Schritte
(B1) Bereitstellen von Harnstoff-haltigen Keimen;
(B2) Fluidisieren der Harnstoff-haltigen Keime;
(B3) Aufsprühen der Harnstoff-haltigen Lösung unter Verwendung eines Additivs mit einer Zusammensetzung wie vorstehend beschrieben.

Sofern das Additiv zwei oder mehr Komponenten umfasst, können diese jeweils einzeln oder zusammen, oder auch in Form von Vormischungen in dem erfindungsgemäßen Verfahren eingesetzt werden. Die Zeitpunkte und Zugabe der Komponenten können variieren. So ist es beispielsweise möglich, eine oder mehrere der Komponenten in die bereitgestellte Harnstofflösung zu geben oder auch eine oder mehrere der Komponenten erst unmittelbar vor dem Aufsprühen der Harnstoff-haltigen Lösung dieser zuzugeben. In Abhängigkeit von der Beschaffenheit der Komponenten kann es vorteilhaft sein, die Komponenten in Form von Lösungen, Suspensionen, Emulsionen oder ähnlichem einzusetzen. Als geeignete Flüssigkeiten für die Lösungen oder sonstige Formulierungen kommen insbesondere Wasser, aber auch organische Lösungsmittel wie beispielsweise Alkohole, Ether, usw. in Betracht.

Die Temperatur der Harnstoff-haltigen Lösung beträgt vorzugsweise > 130°C.

In einer Ausführungsform zur Herstellung einer partikelförmigen Zusammensetzung umfasst das Verfahren den Schritt (C):
(C): Auftrennung der partikelförmige Harnstoff-Zusammensetzung nach ihrer Herstellung in drei Fraktionen aufgetrennt, wobei
eine Fraktion (F1) Partikel mit der gewünschten Zielgröße enthält,
eine Fraktion (F2) Partikel mit einer Größe oberhalb der gewünschten Zielgröße enthält, und
eine Fraktion (F3) Partikel mit einer Größe unterhalb der gewünschten Zielgröße enthält, und
wobei vorzugsweise die Fraktion F2 nach einer Zerkleinerung der Partikel und die Fraktion F3 wieder in das Verfahren zurückgeführt wird.

In Anlagen zur Herstellung von Harnstoff und dessen Weiterverarbeitung zu partikelförmigen Zusammensetzungen fällt üblicherweise auch Ammoniak an. Dieser kann durch eine Wäsche mit geeigneten Säuren, wie beispielsweise Salpetersäure oder Schwefelsäure in die entsprechenden Ammoniumsalze, wie beispielsweise Ammoniumnitrat oder Ammoniumsulfat überführt und diese einer weiteren Verwendung, beispielsweise in Düngemitteln zugeführt werden. Geeignete Verfahren und Durchführung der Säurewäsche sind beispielsweise in der WO2010/060535 beschrieben.

In einer weiteren Ausführungsform zur Herstellung einer partikelförmigen Zusammensetzung umfasst das offenbarte Verfahren den Schritt (D):
(D) Säurewäsche.

Die Säurewäsche kann vorteilhafterweise auch unter Einsatz der vorstehend beschriebenen Säuren der Komponente (iii) erfolgen.

Ein weiterer offenbarter Aspekt der Erfindung betrifft eine Vorrichtung zur Herstellung einer partikelförmigen Zusammensetzung enthaltend Harnstoff umfassend:
(a) einen Granulator;
(b) wenigstens ein Mittel für die Zugabe eines Additivs wie vorstehend beschrieben;
(c) wenigstens ein Mittel für die Auftrennung der partikelförmigen Zusammensetzung in Fraktionen unterschiedlicher Partikelgröße;
(d) ggf. wenigstens ein Mittel für die Durchführung einer Säurewäsche.

In einer bevorzugten Ausführungsform der erfindungsgemäßen Vorrichtung ist der Granulator (a) ein Fließbettgranulator.

Die offenbarte Vorrichtung eignet sich besonders zur Durchführung des offenbarten Verfahrens.

Ein weiterer Aspekt der Erfindung betrifft die Verwendung der erfindungsgemäß erhaltenen AUS 32 Lösung aus Harnstoff in Wasser in Dieselfahrzeugen Feuerungsanlagen, Müllverbrennungsanlagen, Gasturbinen, Schiffsmotoren oder Industrieanlagen zur Reduzierung von Stickoxiden. Die erfindungsgemäße Lösung wird hierzu beispielsweise in den Abgasstrom des Fahrzeugs injiziert und über einem SCR Katalysator, beispielsweise aus Titan, erfolgt die Reduktion der Stickoxide zu N₂ und H₂O. Der Mechanismus verläuft dabei beispielsweise über die Thermolyse des Harnstoffes zu Isocyansäure und anschließender Hydrolyse zu Ammoniak. Das Ammoniak reagiert schlussendlich am Katalysator mit den Stickoxiden.

Im Folgenden wird die Erfindung anhand von Beispielen erläutert. Diese Erläuterungen sind lediglich beispielhaft und schränken den allgemeinen Erfindungsgedanken nicht ein.

### Beispiele:

### Beispiel 1:

In einer Versuchsanlage wurde Harnstoff in einem Fließbettgranulator mit einem zylindrischen Fließbett von 40 cm Durchmesser bei einer Temperatur von circa 108°C granuliert. Das Fließbett war auf der Unterseite mit einer perforierten Platte abgeschlossen, deren Löcher einen Durchmesser von 2,0 mm aufwiesen. Die Fluidisierungsluft strömte mit einer oberflächlichen Geschwindigkeit von circa 2 m/s in das Fließbett. Ein Überlauf wurde 10 cm oberhalb der Bodenplatte an der Seitenwand des Bettes angebracht. Eine definierte Menge (circa 45 kg) an Harnstoffpartikeln oder Harnstoffgranulat mit einer engen Größenverteilung wurde dann als Keime für die Granulierung in die Säule des Granulators gegeben. Das Bett mit den Keimen (circa 50 cm tief) wurde mit heißer Luft bei einer Temperatur von circa 100°C fluidisiert und mit der Zugabe von 96 bis 97 Gew.-%-iger Harnstofflösung mit einer Temperatur von circa 135°C begonnen, sobald das Bett die für den Lauf vorgesehene Temperatur von ca. 108°C erreicht hatte. Aus einem Vorratstank wurde dann die Harnstofflösung mit einem Wassergehalt von 3-4 Gew-% mit einer Rate von 350 kg/h über eine Spritzdüse, welche bei einer Temperatur von circa 140°C mit Luft, zugeführt mit einer Rate von 240 kg/h, betrieben wurde, in den Fließbettgranulator gegeben. Die gemäß der nachstehenden Tabelle 1 eingesetzten Additive für die Granulierung wurden dann bei circa 135° mit der Harnstofflösung vermischt. Feststoffe wurden in regelmäßigen Intervallen von 5 Minuten über einen Auslass aus dem Fließbett abgeführt, um eine weitgehend konstante Höhe des Bettes zu erreichen. Die Proben der so entnommenen Feststoffe wurden dann jeweils gesiebt, um deren Größenverteilung zu bestimmen. Es wurden keine Feststoffe in den Fließbettgranulator zurückgeführt. Die Dauer pro Charge betrug jeweils circa 30 Minuten. Nach Ablauf dieser Zeit wurde die Zufuhr unterbrochen, das Granulat auf circa 100°C abgekühlt, aus dem Fließbettgranulator entfernt und zu seiner Auftrennung in die unterschiedlichen Fraktionen gesiebt. Die Fraktion mit der gewünschten Größenverteilung wurde dann auf circa 60°C abgekühlt, um deren Produkteigenschaften zu analysieren. Alle Fraktionen wurden gewogen, um die Wachstumsrate des Granulates zu ermitteln. Des Weiteren wurde auch der Staub aus den Taschenfiltern der Abluftvorrichtung gesammelt und gewogen.

Entsprechend der vorstehend beschriebenen Vorgehensweise wurden auch Vergleichsversuche zur Granulierung ohne Additivzusatz sowie mit Polyvinylamin (PVA), einer Polyvinylamin/Polyethylenimin-Mischung oder einem Standardadditiv (Harnstoff-Formaldehyd Additiv UF80) durchgeführt und das jeweils erhaltene Granulat entsprechend aufgearbeitet und analysiert.

Die nachstehende Tabelle 1a gibt die entsprechende Beurteilung der Granulate in Hinblick auf die Staubbildung, Druckfestigkeit, Dichte und Verklumpung wieder. Die ebenfalls angegebene Empfindlichkeit für die Staubbildung ist das Ergebnis einer visuellen Beurteilung von aufgefangenem Staub aus einem kleinen Fließbettkühler. Die verwendete Skala für die Bewertung der erhaltenen Granulate ist in Tabelle 1b wiedergegeben.

**Tabelle 1a:**

| Additiv | --- | UF80 | PVA | PEI/PVA 95/5 Gew.- %¹⁾ | PEI/PVA/ Oxalsäure 5/90/5 Gew.-%²⁾ |
|---|---|---|---|---|---|
| Erfindungsgemäß (E) / Vergleich (V) | V | V | V | E | E |
| Dosierung mg/kg | 0 | 5500 | 500 | 800 | 500 |
| Parameter | | | | | |
| Staub im Granulatorfilter | 5 | 2 | 5 | 3 | 2 |
| Staubbildung Abkühlung | 5 | 2 | 4 | 2 | 3 |
| Verklumpung % | 2 | 1 | 3 | 1 | 2 |
| Klumpenhärte | 3 | 1 | 3 | 1 | 1 |
| Druckfestigkeit | 4 | 2 | 3 | 3 | 2 |
| Schüttdichte (lose) | 3 | 1 | 3 | 1 | 1 |
| | | | | | |
| Beurteilung (nicht gewichtet) | 22 | 9 | 21 | 11 | 11 |

| | | | | | |
|---|---|---|---|---|---|
| PVA: Polyvinylamin PEI: Polyethylenimin 1) jeweils bezogen auf das Gemisch aus PVA und PEI 2) jeweils bezogen auf das Gemisch aus PVA, PEI und Oxalsäure | | | | | |

**Tabelle 1b:**

| Skala | Staub im Filter (%) | Staub Abkühlen | Druckfestigkeit kg | Schüttdichte (g/l) | Klumpen (%) | Härte (kg) |
|---|---|---|---|---|---|---|
| 1 | 0-4 | 0 | >3,5 | >675 | 0 | keine |
| 2 | >4-6 | 1 | >3,0-3,5 | 675-665 | 0-10 | gering |
| 3 | >6-8 | 2 | >2,5-3,0 | <665-655 | 11-20 | mittel |
| 4 | >8-10 | 2-3 | >2,0-2,5 | <655-645 | 21-30 | hart |
| 5 | >10 | 3 | <2,0 | <645 | >30 | |

### Beispiel 2:

Entsprechend der in Beispiel 1 beschriebenen Vorgehensweise wurde der Einfluss eines erfindungsgemäßen Granulierungsadditivs aus Oxalsäure in verschiedenen Dosierungen und einer Mischung aus 500 mg/kg Polyethyleniminin und Polyvinylamin (40 Gew.-%/60 Gew.-%, jeweils bezogen auf die Mischung aus Polyethylenimin und Polyvinylamin) bestimmt. Hierbei wurde die Oxalsäure in den Vorratstank der Harnstofflösung gegeben und die Polyethyleniminin/Polyvinylamin-Mischung dem der Düse zugeführten Harnstoffstrom vor dem Sprühen zugeführt. Die so erhaltene Harnstoff-Lösung mit einem Wassergehalt von 3 Gew.-% wurde dann bei einer Temperatur von 132 °C mit einer Rate von 350 kg/h zugeführt und die Aufarbeitung erfolgte wie in Beispiel 1 beschrieben. Ein entsprechender Vergleichsversuch mit Formaldehyd wurde ebenfalls durchgeführt.

In der nachfolgenden Tabelle 2 ist jeweils der Anteil an Staub im Fließbettgranulator wiedergegeben:

**Tabelle 2:**

| | Erfindungsgemäß (E) / Vergleich (V) | Dosierung in mg/kg | Staubanteil / Granulator in % |
|---|---|---|---|
| Oxalsäure | E | 0 | 5,19 |
| | E | 250 | 4,44 |
| | E | 500 | 4,05 |
| | E | 1000 | 2,81 |
| Formaldehyd | V | 4500 | 3,9 |

Die Untersuchungen der gemäß den Beispielen 1-2 erhaltenen Granulate hat ergeben, dass sowohl die Staubbildung als auch die Eigenschaften des Granulats (Druckfestigkeit, Neigung zur Verklumpung) sich bei Zugabe der erfindungsgemäßen Additive verbesserten. Das Ergebnis war mit den bei der Verwendung von Formaldehyd erhaltenen Ergebnissen vergleichbar oder sogar besser, wobei wesentlich geringere Mengen an Additiv benötigt wurden.

### Beispiel 3:

Beispiel 3 zeigt in Tabelle 3 einen Vergleich zwischen einer Vergleichs Harnstofflösung mit typischen Fertilizer Grade Urea, d.h. typischen als Dünger eingesetzten Harnstoff, und einer erfindungsgemäßen Harnstofflösung.

**Tabelle 3:**

| | Spezifikation AUS32 aus DIN 70070:2005-08, Tabelle 1 | | Vergleichs Harnstofflösung mit typischem Fertilizer Grade Urea | Erfindungsgemäße Harnstofflösung | |
|---|---|---|---|---|---|
| | Min. | Max. | | | |
| Urea Anteil | 31,8 | 33,2 | 32,5 | 32,5 | Gew. % |
| Dichte bei 20°C | 1,087 | 1,093 | k.A. | 1,0903 | g/cm³ |
| Brechung bei 20°C | 1,3814 | 1,3843 | k.A. | 1,3828 | |
| Alkalinität als NH₃ | | 0,2 | k.A. | 0,2 | % |
| Biuret | | 0,3 | 0.276-0.333 | <0.3 | % |
| Aldehyde | | 5 | 1138-1788 | <5 | mg/kg |
| Unlösliche Bestandteile | | 20 | k.A. | <20 | mg/kg |
| Phosphate (PO₄) | | 0,5 | k.A. | <0.5 | mg/kg |
| Ca, Fe (jeweils) | | 0,5 | k.A. | <0.5 | mg/kg |
| Cu, Zn, Cr, Ni, Al (jeweils) | | 0,2 | k.A. | <0.2 | mg/kg |
| Mg, Na, K (jeweils) | | 0,5 | k.A. | <0.5 | mg/kg |

Wie in Tabelle 3 zu sehen, hält die erfindungsgemäße Harnstofflösung mit 32,5 Gew. % Harnstoff, die in der Spezifikation (Tabelle 1 der DIN 70070:2005-08) angegebenen Grenzwerte ein. Bei einer handelstypischen Harnstofflösung (Fertilizer Grade Urea), mit ebenfalls 32,5 Gew. % Harnstoff, liegen die Werte für Aldehyde deutlich über den Grenzwerten. Der Gehalt an Biuret liegt im Bereich des Grenzwertes. Für die anderen Anteile der handelstypischen Harnstofflösung (Fertilizer Grade Urea) liegen keine Angaben (k.A.) vor.

Aufgrund des bekannten, sehr hohen Aldehyd Anteils der vergleichbaren handelstypischen Harnstofflösung, ist die Einsatzmöglichkeit der ebenfalls für den Düngemittelbereich entwickelten erfindungsgemäßen partikelförmigen Harnstoffzusammensetzung im Bereich der AUS 32 Lösung (Diesel Exhaust Fluid) überraschend. Gleichzeit lässt sich die erfindungsgemäße partikelförmige Zusammensetzung im Vergleich zu technisch reinen Harnstoff besser trocken und transportieren. Die erfindungsgemäße partikelförmige Zusammensetzung zeigt eine höhere Partikelbeständigkeit, Lagerfähigkeit (höhere Verbackungsneigung des technischen Harnstoffs), weniger Staubbildung und geringere Wasseraufnahme als reiner technischer Harnstoff. Diese vorgenannten Nachteile erschweren ein reproduzierbares Ansetzen einer AUS 32 Lösung (Diesel Exhaust Fluid) aus technischem Harnstoff.

## Patentansprüche

1. Verfahren zur Herstellung einer NOₓ-Reduktionsmittel AUS 32 Lösung (Diesel Exhaust Fluid) umfassend mindestens das Mischen von Wasser und einer partikelförmigen Zusammensetzung enthaltend:
(i) Harnstoff;
und ein Additiv umfassend Komponente (ii):
(ii) Kombination aus wenigstens einem Amino-Gruppen enthaltenden Polymer oder Oligomer und wenigstens einer funktionalisierten Polyvinylverbindung;
wobei der Gewichtsanteil der Komponente (i) in der partikelförmigen Zusammensetzung > 60 Gew.-% und der Gewichtsanteil der Komponente (ii) in der partikelförmigen Zusammensetzung < 1 Gew.-% beträgt und
wobei eine Harnstofflösung erhalten wird und der Gewichtsanteil der Komponente (i) in der erhaltenen Harnstofflösung zwischen größer/gleich 31 Gew. % und kleiner/gleich 34 Gew. % beträgt.

2. Verfahren gemäß Anspruch 1, wobei das Additiv die Komponente (iii) umfasst:
(iii) wenigstens eine Verbindung ausgewählt aus der Gruppe der aliphatischen Dicarbonsäuren, und Anhydriden, der aliphatischen Tricarbonsäuren, und Anhydriden, der aromatischen Dicarbonsäuren, und Anhydriden,
wobei der Gewichtsanteil der Komponente (i) in der partikelförmigen Zusammensetzung > 60 Gew.-% und der Gewichtsanteil der Summe der Komponenten (ii) und (iii) in der in der partikelförmigen Zusammensetzung < 1 Gew.-% beträgt.

3. Verfahren gemäß Anspruch 1 oder 2 wobei die partikelförmige Zusammensetzung enthält:
(i) Harnstoff;
und ein Additiv umfassend die Komponente (ii) und die Komponente (iii):
(ii) Kombination aus Polyethylenimin und Polyvinylalkohol oder Kombination aus Polyethylenimin und Polyvinylamin;
(iii) wenigstens eine Verbindung ausgewählt aus der Gruppe der aliphatischen Dicarbonsäuren, und Anhydriden, der aliphatischen Tricarbonsäuren, und Anhydriden, der aromatischen Dicarbonsäuren und Anhydriden;
wobei der Gewichtsanteil der Komponente (i) in der partikelförmigen Zusammensetzung > 97 Gew.-% und der Gewichtsanteil der Summe der Komponenten (ii) und (iii) in der partikelförmigen Zusammensetzung < 1 Gew.-% beträgt.

4. Verfahren gemäß einem der Ansprüche 1-3 wobei die partikelförmige Zusammensetzung enthält:
(i) Harnstoff;
und ein Additiv umfassend die Komponente (ii) und die Komponente (iii):
(ii) Kombination aus Polyethylenimin und Polyvinylamin;
(iii) wenigstens eine Verbindung ausgewählt aus der Gruppe bestehend aus Oxalsäure, Bernsteinsäure, Zitronensäure, Phthalsäure, Phthalsäureanhydrid,
wobei der Gewichtsanteil der Komponente (i) in der partikelförmigen Zusammensetzung > 97 Gew.-% und der Gewichtsanteil der Summe der Komponenten (ii) und (iii) in der partikelförmigen Zusammensetzung < 1 Gew.-% beträgt.

5. Verfahren gemäß einem der Ansprüche 1-4, wobei das Polyethylenimin der Komponente (ii) ein Molekulargewicht im Bereich von 500 - 2,000,000 Da aufweist.

6. Verfahren gemäß einem der Ansprüche 1-5, wobei das Polyvinylamin der Komponente (ii) ein Molekulargewicht im Bereich von 500 - 1,000,000 Da aufweist.

7. Verfahren gemäß einem der Ansprüche 1-6, wobei der Gewichtsanteil der Komponente (i) in der Zusammensetzung > 98 Gew.-%, bevorzugt > 98,5 Gew.-% beträgt.

8. Verfahren gemäß einem der Ansprüche 1-7, **dadurch gekennzeichnet, dass** der Gewichtsanteil der Summe der Komponenten (ii) und (iii) in der Zusammensetzung < 0,5 Gew.-%, bevorzugt < 0,4 Gew.-%, besonders bevorzugt < 0,3 Gew.-% und ganz besonders bevorzugt < 0,25 Gew.-% beträgt.

9. Verwendung der in einen der Ansprüche 1 bis 8 erhaltenen NOₓ-Reduktionsmittel AUS 32 Lösung aus Harnstoff in Wasser in Dieselfahrzeugen, Feuerungsanlagen, Müllverbrennungsanlagen, Gasturbinen, Schiffsmotoren oder Industrieanlagen zur Reduzierung von Stickoxiden.

10. NOₓ-Reduktionsmittel AUS 32 Lösung (Diesel Exhaust Fluid) erhältlich gemäß einem Verfahren nach einem der Ansprüche 1 bis 8.

## Claims

1. Process for producing a NO_{X} reductant AUS 32 solution (diesel exhaust fluid), comprising at least the mixing of water and a particulate composition comprising:
(i) urea;
and an additive comprising component (ii):
(ii) combination of at least one polymer or oligomer containing amino groups and at least one functionalized polyvinyl compound;
wherein the proportion by weight of component (i) in the particulate composition is > 60% by weight and the proportion by weight of component (ii) in the particulate composition is < 1% by weight and wherein a urea solution is obtained and the proportion by weight of component (i) in the urea solution obtained is not less than 31% by weight and not more than 34% by weight.

2. Process according to Claim 1, wherein the additive comprises component (iii):
(iii) at least one compound selected from the group of the aliphatic dicarboxylic acids, and anhydrides, the aliphatic tricarboxylic acids, and anhydrides, the aromatic dicarboxylic acids, and anhydrides,
wherein the proportion by weight of component (i) in the particulate composition is > 60% by weight and the proportion by weight of the sum total of components (ii) and (iii) in the particulate composition is < 1% by weight.

3. Process according to Claim 1 or 2, wherein the particulate composition comprises:
(i) urea;
and an additive comprising component (ii) and component (iii):
(ii) combination of polyethyleneimine and polyvinyl alcohol or combination of polyethyleneimine and polyvinylamine;
(iii) at least one compound selected from the group of the aliphatic dicarboxylic acids, and anhydrides, the aliphatic tricarboxylic acids, and anhydrides, the aromatic dicarboxylic acids, and anhydrides;
wherein the proportion by weight of component (i) in the particulate composition is > 97% by weight and the proportion by weight of the sum total of components (ii) and (iii) in the particulate composition is < 1% by weight.

4. Process according to any of Claims 1-3, wherein the particulate composition comprises:
(i) urea;
and an additive comprising component (ii) and component (iii):
(ii) combination of polyethyleneimine and polyvinylamine;
(iii) at least one compound selected from the group consisting of oxalic acid, succinic acid, citric acid, phthalic acid, phthalic anhydride,
wherein the proportion by weight of component (i) in the particulate composition is > 97% by weight and the proportion by weight of the sum total of components (ii) and (iii) in the particulate composition is < 1% by weight.

5. Process according to any of Claims 1-4, wherein the polyethyleneimine in component (ii) has a molecular weight in the range of 500-2 000 000 Da.

6. Process according to any of Claims 1-5, wherein the polyvinylamine in component (ii) has a molecular weight in the range of 500-1 000 000 Da.

7. Process according to any of Claims 1-6, wherein the proportion by weight of component (i) in the composition is > 98% by weight, preferably > 98.5% by weight.

8. Process according to any of Claims 1-7, **characterized in that** the proportion by weight of the sum total of components (ii) and (iii) in the composition is < 0.5% by weight, preferably < 0.4% by weight, more preferably < 0.3% by weight and most preferably < 0.25% by weight.

9. Use of the NO_{X} reductant AUS 32 solution of urea in water, obtained in any of Claims 1 to 8, in diesel vehicles, furnaces, trash incinerators, gas turbines, ships' engines or industrial plants for reduction of nitrogen oxides.

10. NO_{X} reductant AUS 32 solution (diesel exhaust fluid) obtainable by a process according to any of Claims 1 to 8.

## Revendications

1. Procédé de fabrication d'une solution de réduction des NO_{X} AUS 32 (fluide d'échappement diesel) comprenant au moins le mélange d'eau et d'une composition particulaire contenant :
(i) de l'urée ;
et un additif comprenant le composant (ii) :
(ii) une combinaison d'au moins un polymère ou oligomère contenant des groupes amino et d'au moins un composé de polyvinyle fonctionnalisé ;
la proportion en poids du composant (i) dans la composition particulaire étant > 60 % en poids et la proportion en poids du composant (ii) dans la composition particulaire étant < 1 % en poids, et
une solution d'urée étant obtenue et la proportion en poids du composant (i) dans la solution d'urée obtenue étant comprise entre supérieure/égale à 31 % en poids et inférieure/égale à 34 % en poids.

2. Procédé selon la revendication 1, dans lequel l'additif comprend le composant (iii) :
(iii) au moins un composé choisi dans le groupe constitué par les acides dicarboxyliques aliphatiques, et anhydrides, les acides tricarboxyliques aliphatiques, et anhydrides, les acides dicarboxyliques aromatiques, et anhydrides,
la proportion en poids du composant (i) dans la composition particulaire étant > 60 % en poids et la proportion en poids de la somme des composants (ii) et (iii) dans la composition particulaire étant < 1 % en poids.

3. Procédé selon la revendication 1 ou 2, dans lequel la composition particulaire contient :
(i) de l'urée ;
et un additif comprenant le composant (ii) et le composant (iii) :
(ii) une combinaison de polyéthylène-imine et d'alcool polyvinylique ou une combinaison de polyéthylène-imine et de polyvinylamine ;
(iii) au moins un composé choisi dans le groupe constitué par les acides dicarboxyliques aliphatiques, et anhydrides, les acides tricarboxyliques aliphatiques, et anhydrides, les acides dicarboxyliques aromatiques, et anhydrides ;
la proportion en poids du composant (i) dans la composition particulaire étant > 97 % en poids et la proportion en poids de la somme des composants (ii) et (iii) dans la composition particulaire étant < 1 % en poids.

4. Procédé selon l'une quelconque des revendications 1 à 3, dans lequel la composition particulaire contient :
(i) de l'urée ;
et un additif comprenant le composant (ii) et le composant (iii) :
(ii) une combinaison de polyéthylène-imine et de polyvinylamine ;
(iii) au moins un composé choisi dans le groupe constitué par l'acide oxalique, l'acide succinique, l'acide citrique, l'acide phtalique, l'anhydride de l'acide phtalique,
la proportion en poids du composant (i) dans la composition particulaire étant > 97 % en poids et la proportion en poids de la somme des composants (ii) et (iii) dans la composition particulaire étant < 1 % en poids.

5. Procédé selon l'une quelconque des revendications 1 à 4, dans lequel la polyéthylène-imine du composant (ii) présente un poids moléculaire dans la plage allant de 500 à 2 000 000 Da.

6. Procédé selon l'une quelconque des revendications 1 à 5, dans lequel la polyvinylamine du composant (ii) présente un poids moléculaire dans la plage allant de 500 à 1 000 000 Da.

7. Procédé selon l'une quelconque des revendications 1 à 6, dans lequel la proportion en poids du composant (i) dans la composition est > 98 % en poids, de préférence > 98,5 % en poids.

8. Procédé selon l'une quelconque des revendications 1 à 7, **caractérisé en ce que** la proportion en poids de la somme des composants (ii) et (iii) dans la composition est < 0,5 % en poids, de préférence < 0,4 % en poids, de manière particulièrement préférée < 0,3 % en poids et de manière tout particulièrement préférée < 0,25 % en poids.

9. Utilisation de la solution de réduction des NO_{X} AUS 32 à base d'urée dans de l'eau obtenue selon l'une quelconque des revendications 1 à 8 dans des véhicules diesel, des installations de combustion, des incinérateurs de déchets, des turbines à gaz, des moteurs marins ou des installations industrielles pour la réduction des oxydes d'azote.

10. Solution de réduction des NO_{X} AUS 32 (fluide d'échappement diesel) pouvant être obtenue par un procédé selon l'une quelconque des revendications 1 à 8.
